# DEMANDE DE BREVET EUROPEEN

(11) **EP 2 591 960 A1**
(43) Date de publication de la demande: **15.05.2013**
(21) Numéro de dépôt: 11306465.3
(22) Date de dépôt: 10.11.2011
(51) Int. Cl.: B60T 1/10, B60W 10/08, B60W 20/00, B60W 30/18, B60W 10/184, B60T 7/04

(54) **Procede d'assistance electrique au freinage d'un vehicule et motorisation associee**

(71) Demandeur: Zerbato, Thierry, 47190 Aiguillon (FR); Duclos, Pascal, 47400 Gontaud De Nogaret (FR)
(72) Inventeur: Zerbato, Thierry, 47190 Aiguillon (FR); Duclos, Pascal, 47400 Gontaud De Nogaret (FR)
(74) Mandataire: Fantin, Laurent

(57) **Abrégé**

L'objet de l'invention est un procédé d'assistance électrique au freinage d'un véhicule à motorisation (M), ladite motorisation (M) comprenant un moteur électrique (10) couplé à un arbre principal (20) entraînant une roue (22) du véhicule, une roue (22) dudit véhicule étant équipée d'un dispositif de freinage (48) mécanique actionné par un circuit hydraulique (47), ledit procédé consistant à capter une information dans le circuit hydraulique (47) et à utiliser ladite information comme consigne d'un couple de freinage généré par le moteur électrique (10) et exercé sur l'arbre principal (20), l'information captée dans le circuit hydraulique (47) de freinage étant une mesure de pression (P) du fluide, ladite mesure de pression (P) étant effectuée par un capteur (60) disposé en sortie du dispositif de mise en pression (56) du circuit hydraulique (47), la mesure de pression (P) étant transmise aux moyens de commande (34) du moteur électrique (10) sous la forme d'un signal électrique de tension électrique (T), et ledit signal étant exploité par lesdits moyens de commande (34) pour le calcul d'une consigne (C) de couple de freinage appliquée au moteur électrique, le procédé étant caractérisé en ce que ladite consigne (C) de couple de freinage électrique est proportionnelle à la tension (T) issue du capteur de pression (60), et en ce que le facteur de proportionnalité (K) entre la tension de sortie (T) du capteur (60) et la consigne (C) est paramétré dans les moyens de commande (34).

## Description

La présente invention est relative à un procédé d'assistance électrique au freinage d'un véhicule.

L'invention vise plus particulièrement la catégorie des véhicules à vitesse modérée.

Par véhicule à vitesse modérée, l'invention entend des véhicules roulant par exemple entre 50 km/h et 80km/h à vitesse maximale, des véhicules légers, notamment utilitaires, des véhicules urbains, des véhicules de livraison ou de proximité, etc.

Ces véhicules à vitesse modérée sont utilisés pour le déplacement de personnes ou le transport de différents objets sur des sites industriels ainsi qu'en zone urbaine et périurbaine.

Ainsi, les trajets effectués avec ces véhicules à vitesse modérée sont généralement courts et entrecoupés d'arrêt prolongés, dite utilisation « stop and go ».

Sur ces petits trajets, souvent encombrés, et parcourus en effectuant des arrêts fréquents et des manoeuvres répétitives, l'utilisation d'un véhicule dont la motorisation comprend au moins un moteur électrique est particulièrement avantageuse.

En effet, un moteur électrique ne consomme pas d'énergie à l'arrêt, possède un bon rendement quel que soit son régime, et ne produit pas de nuisance sonore, contrairement à un moteur thermique.

Cependant, pour les trajets plus longs réclamant une autonomie élevée, lesdits véhicules à vitesse modérée peuvent être équipés d'une motorisation comprenant au moins un moteur thermique.

Ainsi, dans le cas d'une utilisation mixte, c'est-à-dire dans laquelle le véhicule doit être utilisé sur des trajets courts entrecoupés d'arrêts prolongés mais aussi sur des trajets plus longs de plusieurs kilomètres, les véhicules à vitesse modérée sont équipés d'une motorisation hybride à moteurs électrique et thermique.

Par conséquent, l'invention concerne plus particulièrement les véhicules à vitesse modérée et pourvus d'une motorisation électrique ou hybride comprenant au moins un moteur électrique.

Un autre inconvénient rencontré lors de l'utilisation de ces véhicules à vitesse modérée découle de la fréquence des arrêts ou des ralentissements sur les nombreux trajets effectués.

Comme tout véhicule, ces véhicules à vitesse modérée sont équipés d'un système de freinage comprenant au moins des moyens de freinage mécanique d'au moins une roue du véhicule.

Aussi, étant donné le nombre important et la fréquence élevée des freinages ou des ralentissements effectués lors de l'utilisation de ces véhicules, les moyens mécaniques tendent à s'user très rapidement et à perdre en efficacité.

Cette usure rapide des moyens de freinage alourdit les frais d'entretien de ces véhicules.

Aussi, la présente invention vise à pallier les inconvénients de l'art antérieur en proposant un procédé d'assistance au freinage facile à mettre en oeuvre, ne présentant pas de pièce d'usure, et utilisant le moteur électrique d'une motorisation d'un véhicule à vitesse modérée pour assister le freinage mécanique d'une ou des roues dudit véhicule, et donc diminuer l'usure et les coûts d'entretien des moyens mécaniques de freinage.

A cet effet, l'invention a pour objet un procédé d'assistance électrique au freinage d'un véhicule à motorisation, ladite motorisation comprenant au moins un moteur électrique dont l'arbre de sortie est couplé à un arbre principal entraînant au moins une roue du véhicule, au moins une roue dudit véhicule étant équipée d'un dispositif de freinage mécanique actionné par l'intermédiaire d'un circuit hydraulique, ledit procédé consistant à capter une information dans le circuit hydraulique du circuit principal de freinage et à utiliser ladite information comme consigne d'un couple de freinage généré par le moteur électrique et exercé sur l'arbre principal d'entraînement des roues, l'information captée dans le circuit hydraulique de freinage étant une mesure de pression du fluide contenu dans ledit circuit, ladite mesure de pression étant effectuée par un capteur disposé en sortie du dispositif de mise en pression du circuit hydraulique de freinage, la mesure de pression étant transmise aux moyens de commande du moteur électrique sous la forme d'un signal électrique de tension électrique, et ledit signal étant exploité par lesdits moyens de commande pour le calcul d'une consigne de couple de freinage appliquée au moteur électrique, le procédé étant caractérisé en ce que ladite consigne de couple de freinage électrique est proportionnelle à la tension issue du capteur de pression, et en ce que le facteur de proportionnalité entre la tension de sortie du capteur et la consigne de couple de freinage est paramétré dans les moyens de commande du moteur électrique.

Aussi, en terme de sécurité et de fiabilité du présent procédé d'assistance électrique au freinage, le couplage permanent entre l'arbre de sortie du moteur électrique et l'arbre entraînant les roues est une caractéristique importante de l'invention.

Selon un autre objectif, et simultanément à la génération d'un couple de freinage, le fonctionnement en générateur du moteur électrique permet de recharger les moyens d'alimentation dudit moteur électrique.

D'autres caractéristiques et avantages ressortiront de la description qui va suivre de l'invention, description donnée à titre d'exemple uniquement, en regard des dessins annexés sur lesquels :
- la figure 1 représente schématiquement une motorisation et un système mécanique de freinage d'un véhicule à vitesse modérée susceptible de permettre la mise en oeuvre du procédé d'assistance électrique au freinage selon l'invention,
- la figure 2 est un diagramme représentant la relation entre la pression mesurée et le signal de sortie d'un capteur de pression utilisé pour la mise en oeuvre du procédé d'assistance électrique au freinage selon l'invention,
- la figure 3 est un diagramme représentant la relation entre la consigne du couple de freinage électrique et le signal de sortie d'un capteur de pression utilisé pour la mise en oeuvre du procédé d'assistance électrique au freinage selon l'invention.

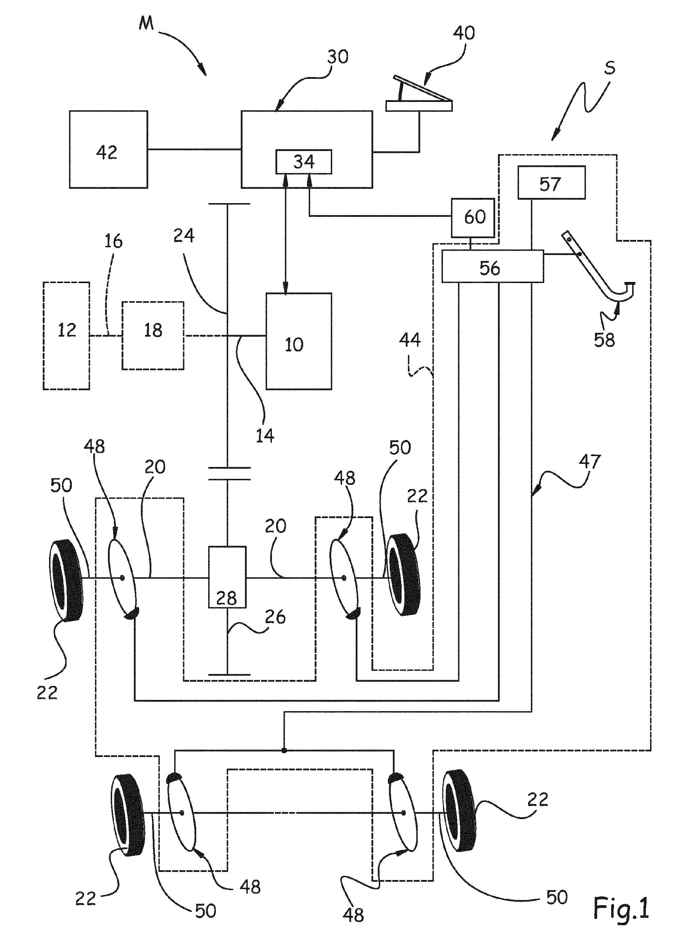

Sur la figure 1, on a représenté schématiquement la conception d'une motorisation M d'un véhicule susceptible de permettre la mise en oeuvre du procédé d'assistance électrique au freinage selon l'invention.

La mise en oeuvre du présent procédé est décrite pour un véhicule à motorisation électrique ou hybride, notamment une motorisation hybride électrique et thermique pouvant fonctionner en mode purement électrique, en mode électrique/thermique, ou en mode purement thermique avec des transitions progressives entre chaque mode.

Bien entendu, l'application du présent procédé n'est pas limitée à un véhicule à motorisation hybride thermique/électrique, la mise en application de l'invention nécessitant seulement une motorisation comprenant au moins un moteur électrique utilisé pour entraîner au moins une roue du véhicule.

Ainsi, dans une variante électrique, ladite motorisation M comprend au moins un moteur électrique 10 avec un premier arbre de sortie 14.

Et, dans une variante hybride, ladite motorisation M comprend aussi au moins un moteur thermique 12, l'arbre de sortie 16 du moteur thermique 12 pouvant être relié à l'arbre de sortie 14 du moteur électrique par un dispositif 18 de couplage en rotation.

Afin d'obtenir un fonctionnement de la motorisation M hybride dans les différents modes purement thermique ou électrique, ou hybride électrique/thermique, le dispositif 18 de couplage en rotation est désengageable. Par désengageable, l'invention entend que le dispositif 18 de couplage permet de créer ou de couper la liaison en rotation entre l'arbre de sortie 16 du moteur thermique 12 et l'arbre de sortie 14 du moteur électrique.

A titre d'exemple, ledit dispositif 18 de couplage peut être un embrayage seul ou associé à une boîte de vitesse, ou bien un variateur permettant de séparer ou de lier lesdits arbres en rotation avec un rapport variable de transmission.

Ensuite, dans une motorisation M adaptée pour la mise en oeuvre du présent procédé, l'arbre de sortie 14 du moteur électrique 10 est couplé à un arbre principal 20 entraînant au moins une roue 22 d'un véhicule et plus particulièrement d'un véhicule léger à vitesse modérée.

Afin d'assurer une transmission de couple fiable et indépendante d'une quelconque pièce d'usure, l'arbre de sortie 14 du moteur électrique 10 est de préférence couplé de manière permanente à l'arbre principal 20, c'est-à-dire sans possibilité de désengager ledit couplage.

De plus, et toujours dans le même objectif de fiabilité, la transmission de mouvement entre l'arbre de sortie 14 du moteur électrique 10 et l'arbre principal 20 entraînant les roues 22 est de préférence directe.

Par transmission directe, l'invention entend qu'aucune pièce n'est intercalée entre l'arbre de sortie 14 et l'arbre principal 20 en dehors des pièces solidaires desdits arbres (14,20) et utilisées pour la réalisation de ladite transmission.

De préférence, cette transmission permanente et directe prend la forme d'un engrenage composé d'une première roue dentée 24 solidaire en rotation et en translation de l'arbre de sortie 14 du moteur électrique et d'une deuxième roue dentée 26 solidaire en rotation et en translation de l'arbre principal 20.

Selon une caractéristique importante de l'invention, la première roue dentée 24 et la deuxième roue dentée 26 permettent donc d'assurer une transmission directe et permanente, et donc fiable, du couple positif ou négatif généré par le moteur électrique 10 entre l'arbre 14 dudit moteur électrique et l'arbre principal 20.

De préférence, ladite deuxième roue dentée 26 fait partie d'un différentiel 28, et l'arbre principal 20 est un train de roues du véhicule comprenant au moins une roue 22 à chacune de ses extrémités.

Afin de piloter son fonctionnement, la motorisation M comprend des moyens de supervision 30 au moins composés de moyens de commande 34 du moteur électrique.

Eventuellement, et notamment dans la variante hybride de ladite motorisation M, lesdits moyens de supervision 30 peuvent aussi gérer le fonctionnement du moteur thermique 12 et du dispositif de couplage 18.

Afin de permettre la conduite du véhicule, lesdits moyens 30 de supervision sont reliés à des moyens 40 actionnables par l'utilisateur dont au moins une pédale d'accélération analogique.

De préférence, le moteur électrique 10 est un moteur de type sans balai, tel un moteur asynchrone ou synchrone à aimant permanent au rotor, et les moyens de commande 34 sont à base d'électronique et d'électronique de puissance, tel un variateur de vitesse électronique.

L'utilisation d'un moteur électrique 10 sans balai est particulièrement avantageuse car il s'agit d'une machine électrique ne présentant pas de pièces de connexion, et donc de pièces d'usure, entre le rotor et le stator.

Bien entendu, les moyens de commande 34 sont reliés à des moyens d'alimentation 42 en énergie électrique et ils gèrent l'alimentation dudit moteur électrique 10 selon une loi de commande prédéfinie et selon la vitesse à donner à l'arbre principal 20.

Ensuite, de façon connue, un véhicule est généralement équipé d'un système de freinage.

Un système S de freinage susceptible d'équiper un véhicule à vitesse modérée est illustré en figure 1.

Ledit système S de freinage comprend généralement un circuit principal 44 de freinage, utilisé pour ralentir ou arrêter le véhicule lors d'un déplacement.

Le circuit principal 44 prend la forme d'un circuit hydraulique 47 permettant d'actionner au moins un dispositif de freinage 48 mécanique disposé au niveau d'une roue 22 du véhicule.

Un dispositif de freinage 48 peut prendre la forme d'un frein à disque et étrier, ou d'un tambour et de mâchoires, le disque ou le tambour étant monté sur l'axe 50 des roues 22.

De préférence, chaque roue 22, notamment quatre, du véhicule est équipée d'un dispositif de freinage 48 actionné par le circuit hydraulique 47 du circuit principal 44.

Le circuit hydraulique 47 est relié à chaque dispositif de freinage 48 et il comprend au moins un dispositif de mise en pression 56 relié à un réservoir 57 de fluide hydraulique, notamment de l'huile, le dispositif de mise en pression 56 permettant de faire varier la pression du fluide dans ledit circuit hydraulique 47 sous l'effet d'une pédale de frein 58.

Qu'il s'agisse d'un frein à disque et étrier ou d'un tambour et de mâchoires, chaque dispositif de freinage 48 comprend des pièces d'usure : le disque et les plaquettes de l'étrier ou le tambour et les garnitures des mâchoires.

Etant donné la fréquence des ralentissements et le nombre important d'arrêts dus aux utilisations urbaines, périurbaines, ou sur site industriel, de ces véhicules à vitesse modérée, lesdites pièces d'usure des dispositifs de freinage 48 ont tendance à s'user rapidement.

Aussi, les axes 50 d'au moins un train, notamment avant ou arrière, de deux roues 22, équipées chacune d'un dispositif de freinage 48, correspondant à l'arbre principal 20 entraîné par la motorisation M du véhicule, le procédé selon l'invention prévoit de générer un couple de freinage avec le moteur électrique 10 et d'appliquer ce couple de freinage sur l'arbre principal 20 pour assister le freinage mécanique réalisé par les dispositifs de freinage 48 sous l'effet de la mise en pression du fluide dans le circuit hydraulique 47.

Les freins étant des organes de sécurité importants d'un véhicule, et de manière à limiter les défaillances de cette assistance électrique au freinage, il est donc important que l'arbre de sortie 14 du moteur électrique 10 soit couplé de manière permanente à l'arbre principal 20 et que la transmission de mouvement, et donc de couple, entre l'arbre de sortie 14 du moteur électrique 10 et l'arbre principal 20 entraînant les roues 22 soit la plus directe possible.

Afin de mettre en oeuvre cette assistance électrique au freinage, le procédé selon l'invention consiste à capter une information dans le circuit hydraulique 47 du circuit principal 44 de freinage et à utiliser ladite information comme consigne du couple de freinage généré par le moteur électrique 10 et exercé sur l'arbre principal 20 d'entraînement des roues.

De préférence, le couple de freinage exercé par le moteur électrique 10 sur l'arbre principal 20 d'entraînement est proportionnel à l'information captée dans le circuit hydraulique 47 de freinage de façon que la décélération du véhicule soit progressive et que le conducteur bénéficie d'un freinage à la fois souple et efficace.

Plus particulièrement, l'information captée dans le circuit hydraulique 47 du circuit principal 44 de freinage est une mesure de pression P du fluide contenu dans le circuit hydraulique 47.

De préférence, le dispositif de mise en pression 56 est un maître-cylindre dont la tige du piston se déplace sous l'effet de la pédale de frein 58, éventuellement par l'intermédiaire d'un servofrein multipliant l'effort exercé par le conducteur sur ladite pédale.

Aussi, ladite mesure de pression P est effectuée par un capteur 60 disposé en sortie du dispositif de mise en pression 56 du circuit hydraulique 47 de freinage. Plus précisément, ledit capteur 60 peut être installé au niveau d'une sortie non utilisée dudit dispositif 56 ou en dérivation au niveau du circuit hydraulique 47 de freinage, notamment à proximité d'une sortie du dispositif 56 reliée audit circuit.

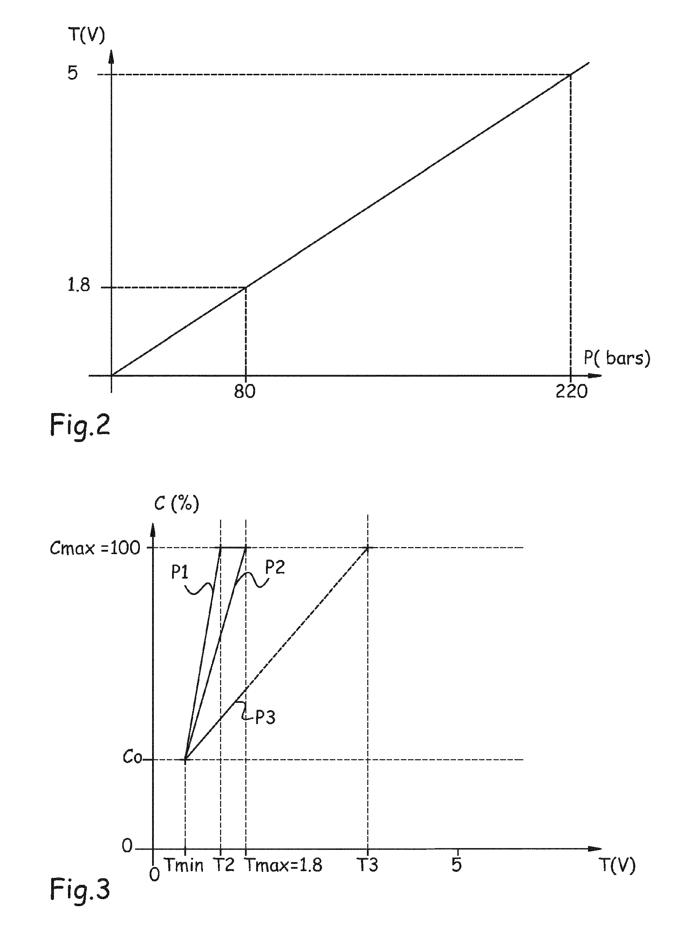

Une fois captée, l'information est transmise aux moyens de commande 34 du moteur électrique 10 sous la forme d'un signal électrique analogique ou numérique, et ledit signal est exploité par lesdits moyens de commande 34 pour le calcul d'une consigne C de couple de freinage appliquée au moteur électrique. Comme illustré en figure 2, la mesure de pression P, en bars, effectuée par le capteur 60 est transmise sous la forme d'un signal de tension électrique T aux moyens de commande 34.

De préférence, selon l'invention, ladite tension électrique T dudit signal est proportionnelle à la pression P mesurée dans le circuit hydraulique de freinage 47, le facteur de proportionnalité entre la pression mesurée et la tension en sortie du capteur dépendant des caractéristiques données audit capteur par son constructeur.

A titre indicatif, le capteur 60 choisi peut mesurer une pression P allant jusqu'à 220 bars et correspondant à un signal de sortie ayant une tension de 5 Volts.

La valeur maximale de la pression P du fluide dans le circuit 47 du système de freinage S d'un véhicule à vitesse modérée se situant aux alentours de 80 bars, la tension maximale Tmax du signal électrique utilisé pour le calcul de la consigne C de couple de freinage électrique se situe donc aux alentours de 1,8 Volts.

La figure 3 illustre différentes relations entre la tension T sortant du capteur de pression 60 et la consigne C de couple de freinage appliquée au moteur électrique 10.

Ladite consigne C est une valeur exprimée en pourcentage du couple de freinage pouvant être délivré par le moteur électrique 10, la consigne Cmax de 100% correspondant au couple maximal de freinage délivré par le moteur électrique 10 dans ses conditions nominales de fonctionnement.

De préférence, selon l'invention, ladite consigne C de couple de freinage électrique est proportionnelle à la tension T issue du capteur de pression 60.

Avantageusement, afin d'ajuster facilement la puissance du freinage en fonction du véhicule, et de sa masse par exemple, le facteur de proportionnalité K entre la tension de sortie T du capteur 60 et la consigne C de couple de freinage est paramétrable.

Avantageusement, ledit facteur de proportionnalité K est paramétré dans les moyens de commande 34 du moteur électrique 10.

Aussi, ledit paramétrage du facteur de proportionnalité K peut par exemple être effectué en usine en fonction des caractéristiques du véhicule et de manière à préserver l'agrément de conduite dudit véhicule.

Ainsi, et comme illustré en figure 3, un premier paramétrage P1 consiste en une relation de facteur de proportionnalité K1 faisant correspondre la consigne de freinage Cmax maximale à la valeur maximale Tmax de la tension du signal en sortie du capteur 60, et donc à la valeur maximale de la pression P prise par le fluide dans le circuit hydraulique 47.

Selon ce premier paramétrage P1, le freinage électrique et le freinage mécanique sont utilisés dans une même proportion, avec une utilisation simultanée de leurs capacités maximales respectives.

Un deuxième paramétrage P2 consiste en une relation de facteur de proportionnalité K2 faisant correspondre la consigne de freinage Cmax maximale à une valeur T2 inférieure à la valeur maximale Tmax de la tension du signal en sortie du capteur 60.

Selon ce deuxième paramétrage P2, l'utilisation du freinage électrique est favorisée devant celle du freinage mécanique : le freinage électrique étant utilisé dans une plus grande proportion que le freinage mécanique, et la capacité maximale du freinage électrique étant sollicitée avant la capacité maximale des freins mécaniques.

Un troisième paramétrage P3 consiste en une relation de facteur de proportionnalité K3 faisant correspondre la consigne de freinage Cmax maximale à une valeur T3 supérieure à la valeur maximale Tmax de la tension du signal en sortie du capteur 60.

Selon ce troisième paramétrage P3, l'utilisation du freinage électrique est limitée devant celle du freinage mécanique : le freinage électrique étant utilisé dans une plus faible proportion que le freinage mécanique, et la capacité maximale du freinage mécanique étant sollicitée alors que seulement une partie de la capacité maximale du freinage électrique est utilisée.

Aussi, quel que soit le facteur de proportionnalité K paramétré, la consigne C de freinage est calculée et transmise instantanément au moteur électrique 10 par les moyens de commande 34, et par conséquent, le couple de freinage électrique est asservi sensiblement en temps réel au couple de freinage mécanique.

Afin d'éviter d'éventuels désagréments dus à une imprécision ou à des oscillations des mesures de pression à faible valeur, l'invention prévoit d'appliquer un couple de freinage électrique aux roues du véhicule uniquement lorsque la tension T du signal issu du capteur dépasse une valeur minimale Tmin. Pour donner un ordre d'idées, et selon les caractéristiques énoncées précédemment du capteur 60, ladite tension minimale Tmin se situe aux environs de 0,6 Volts.

Avantageusement, notamment lors de l'utilisation d'une motorisation hybride ou d'une motorisation uniquement électrique, il peut être intéressant d'appliquer un faible couple de freinage sur l'arbre principal à l'aide du moteur électrique pour simuler la présence du frein moteur tel qu'il est perçu sur les véhicules à moteur thermique.

Dans ce cas, l'information captée pour piloter le moteur électrique 10 et renvoyée aux moyens de commande 34 est relative au relâchement des moyens 40 actionnables par l'utilisateur tels la pédale d'accélération.

Plus précisément, une consigne Co de couple de freinage minimal est paramétrée dans les moyens de commande 34 du moteur électrique 10 et transmise au moteur électrique lorsque la pédale d'accélération 40 est relâchée.

Par conséquent, cette valeur Co minimale est aussi la valeur initiale de la consigne C de freinage transmise au moteur électrique lors d'un appui sur la pédale de frein 58 et du dépassement par le signal issu du capteur 60 de la tension minimale Tmin.

De préférence, ladite consigne minimale Co est prise entre 10 et 15 % du couple maximal de freinage délivré par le moteur électrique 10 dans ses conditions nominales de fonctionnement.

Avantageusement, lorsque le moteur électrique 10 exerce un couple de freinage sur l'arbre principal 20, ledit moteur électrique 10 fonctionne en générateur et est utilisé pour recharger les moyens d'alimentation 42 en énergie électrique.

Ainsi, lors d'une assistance électrique au freinage ou lors de la simulation d'un frein moteur, le moteur électrique 10 permet de récupérer une partie de l'énergie cinétique du véhicule et de la transformer en énergie électrique rechargeant les moyens d'alimentation 42.

Bien entendu, la présente invention couvre aussi un véhicule à vitesse modérée dont la motorisation comprend au moins un moteur électrique dont l'arbre de sortie est couplé à l'arbre d'entraînement des roues, et utilisant le procédé d'assistance électrique au freinage tel qu'il vient d'être décrit.

D'une part, on constate que le procédé selon l'invention est peu coûteux à adapter sur un véhicule électrique ou hybride existant.

En effet, seul le capteur de pression 60 doit être rajouté pour permettre la mise en oeuvre dudit procédé, le circuit hydraulique de freinage et les moyens de commande du moteur électrique étant déjà présents sur le véhicule.

D'autre part, on constate aussi que le procédé selon l'invention permet d'amplifier simplement le freinage existant sur un véhicule électrique ou hybride.

## Revendications

1. Procédé d'assistance électrique au freinage d'un véhicule à motorisation (M), ladite motorisation (M) comprenant au moins un moteur électrique (10) dont l'arbre de sortie (14) est couplé à un arbre principal (20) entraînant au moins une roue (22) du véhicule, au moins une roue (22) dudit véhicule étant équipée d'un dispositif de freinage (48) mécanique actionné par l'intermédiaire d'un circuit hydraulique (47), ledit procédé consistant à capter une information dans le circuit hydraulique (47) du circuit principal (44) de freinage et à utiliser ladite information comme consigne d'un couple de freinage généré par le moteur électrique (10) et exercé sur l'arbre principal (20) d'entraînement des roues, l'information captée dans le circuit hydraulique (47) de freinage étant une mesure de pression (P) du fluide contenu dans ledit circuit, ladite mesure de pression (P) étant effectuée par un capteur (60) disposé en sortie du dispositif de mise en pression (56) du circuit hydraulique (47) de freinage, la mesure de pression (P) étant transmise aux moyens de commande (34) du moteur électrique (10) sous la forme d'un signal électrique de tension électrique (T), et ledit signal étant exploité par lesdits moyens de commande (34) pour le calcul d'une consigne (C) de couple de freinage appliquée au moteur électrique, le procédé étant **caractérisé en ce que** ladite consigne (C) de couple de freinage électrique est proportionnelle à la tension (T) issue du capteur de pression (60), et **en ce que** le facteur de proportionnalité (K) entre la tension de sortie (T) du capteur (60) et la consigne (C) de couple de freinage est paramétré dans les moyens de commande (34) du moteur électrique (10).

2. Procédé d'assistance électrique au freinage d'un véhicule selon la revendication 1, **caractérisé en ce que** l'arbre de sortie (14) du moteur électrique (10) est couplé de manière permanente à l'arbre principal (20).

3. Procédé d'assistance électrique au freinage d'un véhicule selon la revendication 1 ou 2, **caractérisé en ce que** ladite tension électrique (T) dudit signal est proportionnelle à la pression (P) mesurée dans le circuit hydraulique de freinage (47).

4. Procédé d'assistance électrique au freinage d'un véhicule selon l'une des revendications 1 à 3, **caractérisé en ce qu'**un paramétrage (P1), respectivement (P2) ou (P3), consiste en une relation de facteur de proportionnalité (K1), (K2) ou (K3) faisant correspondre la consigne de freinage (Cmax) maximale à la valeur maximale (Tmax), respectivement à une valeur (T2) inférieure à la valeur maximale (Tmax), ou à une valeur (T3) supérieure à la valeur maximale (Tmax), de la tension du signal en sortie du capteur (60).

5. Procédé d'assistance électrique au freinage d'un véhicule selon l'une des revendications 1 à 4, **caractérisé en ce qu'**il prévoit d'appliquer un couple de freinage électrique aux roues du véhicule uniquement lorsque la tension (T) du signal issu du capteur (60) dépasse une valeur minimale (Tmin).

6. Procédé d'assistance électrique au freinage d'un véhicule selon l'une des revendications 1 à 5, des moyens (40) actionnables par l'utilisateur tels une pédale d'accélération étant reliés aux moyens de supervision (30) de la motorisation, **caractérisé en ce qu'**il prévoit qu'une consigne (Co) de couple de freinage minimal est paramétrée dans les moyens de commande (34) et transmise au moteur électrique lorsque la pédale d'accélération (40) est relâchée.

7. Procédé d'assistance électrique au freinage d'un véhicule selon la revendication 6, **caractérisé en ce que** la valeur (Co) minimale est la valeur initiale de la consigne (C) de freinage transmise au moteur électrique lors d'un appui sur la pédale de frein (58) et du dépassement d'une tension minimale (Tmin) par le signal issu du capteur (60).

8. Procédé d'assistance électrique au freinage d'un véhicule selon l'une des revendications 1 à 7, **caractérisé en ce que** ledit moteur électrique (10) fonctionne en générateur et est utilisé pour recharger les moyens d'alimentation (42) en énergie électrique lorsque ledit moteur électrique (10) exerce un couple de freinage sur l'arbre principal (20).

9. Procédé d'assistance électrique au freinage d'un véhicule selon l'une des revendications 1 à 8, **caractérisé en ce que** la transmission de mouvement entre l'arbre de sortie (14) du moteur électrique (10) et l'arbre principal (20) entraînant les roues (22) est directe.

10. Véhicule à vitesse modérée dont la motorisation (M) comprend au moins un moteur électrique (10) dont l'arbre de sortie (14) est couplé à un arbre principal (20) entraînant au moins une roue (22) du véhicule, et utilisant le procédé d'assistance électrique au freinage selon l'une des revendications précédentes.
